# EUROPEAN PATENT APPLICATION

(11) **EP 3 696 739 A1**
(43) Date of publication of application: **19.08.2020**
(21) Application number: 19156930.0
(22) Date of filing: 13.02.2019
(51) Int. Cl.: G06Q 10/00, G06Q 10/06

(54) **EVALUATION OF SOFTWARE-BASED BUSINESS MODELS**

(71) Applicant: Siemens Aktiengesellschaft, 80333 München (DE)
(72) Inventor: Körner, Christian, 83346 Bergen (DE)

(57) **Abstract**

The disclosure describes a system to realize business agility with speed and scale necessary for the digital service age. As products dissolve into value streams, value creation is to be the focus for business models (BM). The described system supports this by guiding definition and elaboration of business models (BM) by means of value drivers (VM). As these value drivers are common to most of the business models in a specific domain, synergistic business value is in focus and the rightsizing of the targeted domain is supported.

## Description

The present invention is directed to a computer-implemented method for evaluation of a plurality of software-based business models, to a respective computer program and a computer-readable storage medium, as well as a respective computer system.

For new hardware-based business models, there exists a set of business practices to create value from the business model. These practices may include for example creating a business plan, integrating the business plan into a product line, improving a user value by value analysis or value managing and reducing costs by value stream analysis. However, these approaches are suitable only for a limited number of new business models in a given time frame. Under the aspect of digitalization there may be, however, several business models to be considered every day. Consequently, evaluating them could block a lot of personnel or important business models could be missed due to lack of resources.

In view of this, it is an objective of the present invention to present an improved concept or system for evaluation of software-based business models that allows for an efficient evaluation and management of an increased number of business models within less or the same time.

This objective is achieved by a computer-implemented method, a computer program, a computer-readable storage medium and a computer system according to the independent claims. Further embodiments and implementations are subject matter of the dependent claims.

According to a first independent aspect of the improved concept, a computer-implemented method for evaluation of a plurality of software-based business models is provided. The method comprises, for each of the business models, importing a representation of the business model by an import module, wherein the representation of a business model comprises a set of predefined business model parameters defining the business model. The method further comprises identifying a set of value creator parameters by a controller module based on the parameters of the imported business models. For each value creator parameter, a respective value creating volume is determined based on the business model parameters of all imported business models by the controller module. The set of value creator parameters is then sorted according to their respective value creation volumes by the controller module. At least two value map dimensions corresponding to respective groups of the sorted value creator parameters are identified by the controller module. Furthermore, respective coordinates in a space defined by the value map dimensions are assigned to each of the business models by the controller module. The method further comprises storing the coordinates of all the business models to a computer-readable storage medium by a data storage module.

Here and in the following, the import module, the controller module, the data storage module as well as other modules referred to, may for example be software modules of a computer program for carrying out the computer-implemented method. Alternatively, the modules may correspond to respective hardware modules with software for carrying out the respective steps stored on them.

In the context of this disclosure, a business model may be based on a business idea, which contains as a minimum information a problem to be solved or a benefit to be created for example for a defined set of stakeholders. To create one or more business models out of a business idea, it may be defined more precisely in several aspects and for example be checked whether it fits or is viable for a respective company. This information can be captured and evaluated as steps to be taken, rules to be followed and resources provided or used. In the context of this disclosure, this information may be denoted as business model parameters.

According to a method according to the improved concept, the business models are effectively mapped to value creators, defined by the value creator parameters and respectively sorted. A value driver may be a ordered collection of value creators. The value drivers may create the dimensions of the value space. The coordinates of the business models may serve as a starting point for cost and value engineering of the set of business models. In this way, a method according to the improved concept allows an efficient evaluation of a large number of software-based business models.

According to several implementations of the computer-implemented method, after sorting the set of value creator parameters, at least one of the value creator parameters of the set of value creator parameters is split by the controller module to obtain two or more further value creator parameters. The set of value creator parameters including the further value creator parameters is then updated by the controller module according to a result of the splitting. The updated set of value creator parameters is sorted according to their respective value creation volumes by the controller module.

Technical reasons for the split may include for instance size in items or value, independent parameters which do not form a single order and need to be ordered separately.

According to several implementations, after sorting the set of value creator parameters, at least two of the value creator parameters of the set of value creator parameters are merged by the controller module and the set of value creators is updated by the controller module according to a result of the merging. The updated set of value creator parameters is sorted according to the respective value creation volumes by the controller module.

According to several implementations, the identifying of the at least two value map dimensions is performed corresponding to respective groups of the updated and sorted value creator parameters by the controller module.

According to several implementations of the method, for each of the business models, a respective set of quality rules, also denoted as quality requirements, is imported by the import module. The set of value creator parameters is identified by the controller module based on the parameters of the imported business models in compliance with the respective set of quality rules.

According to several implementations, the method further comprises generating a result of the evaluation by creating a value driver map, also denoted as value creator map, depending on the coordinates of all of the business models by the controller module. The method further comprises storing the value driver map to the computer-readable storage medium by the data storage module and/or presenting the value driver map to a human machine interface by a presentation module.

According to a second independent aspect of the improved concept, a computer program is provided. The computer program comprises instructions that, when executed by a computer system, in particular by a processor of a computer system, cause the computer system to carry out a computer-implemented method according to the improved concept.

According to several implementations of the computer program, the computer program comprises an import module for importing a representation for each of the business models, wherein the representation of a business model comprises a set of predefined business model parameters defining the business model. The computer program further comprises a controller module for identifying a set of value creator parameters, based on the parameters of the imported business models, determining a respective value creating volume based on the business model parameters of all imported business models for each value creator parameter, sorting the set of value creator parameters according to their respective value creating volumes, identifying at least two value map dimensions corresponding to respective groups of the sorted value creator parameters and assigning respective coordinates in a space defined by the value map dimensions to each of the business models. The computer program further comprises a data storage module for storing the coordinates of all of the business models to a computer-readable storage medium.

According to a further independent aspect of the improved concept, a computer-readable storage medium is provided, wherein the computer-readable storage medium stores a computer program according to the improved concept.

According to a further independent aspect of the improved concept, a computer system is provided. The computer system comprises a processor and a computer-readable storage medium storing instructions that, when executed by the processor, cause the computer system to carry out a method according to the improved concept.

Further implementations of the computer system follow readily from the various implementations and embodiments of the computer-implemented method and vice versa. The invention will be explained in detail with respect to exemplary implementations and respective figures. In the figures, identical or functionally identical elements are denoted by identical reference signs.

In the figures:
- FIG 1: shows a flow chart of an exemplary implementation of a computer-implemented method according to the improved concept;
- FIG 2: shows a block diagram of an exemplary implementation of a computer system or computer program according to the improved concept;
- FIG 3: shows a diagram representing several business models and associated value creator parameters according to a further exemplary implementation of a method according to the improved concept;
- FIG 4: shows a further diagram of the business models and value creator parameters of FIG 3;
- FIG 5: shows a block diagram of a further exemplary implementation of a computer system according to the improved concept;
- FIG 6: shows a block diagram of a further exemplary implementation of a computer program according to the improved concept; and
- FIG 7: shows a further block diagram of a further exemplary implementation of a computer program according to the improved concept.

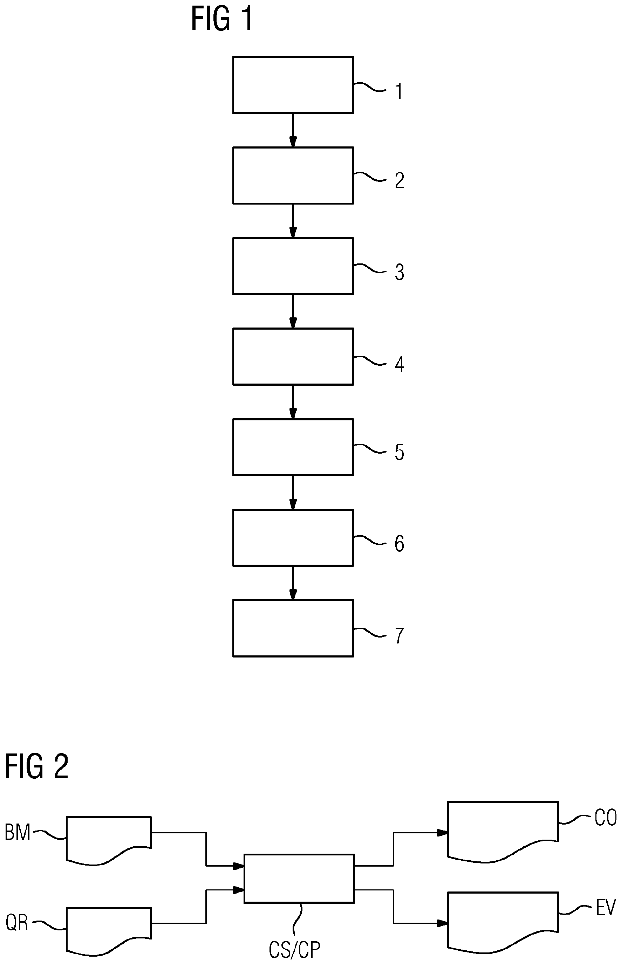

In FIG 1, a flow chart for an exemplary implementation of a computer-implemented method according to an improved concept is shown. The method is for evaluating a plurality of software-based business models.

In a step 1, for each of the business models, a representation of the business model is imported by an import module of a computer program. The representation of the business model comprises a set of predefined business model parameters defining the business model. In a step 2, a set of value creator parameters is identified by a controller module of the computer program based on a business model parameters. In a step 3, for each value creator parameter, a respective value creation volume is determined based on the business model parameters of all imported business models by the controller module.

In a step 4, the set of value creator parameters is sorted according to the respective value creation volumes by the controller module. In a step 5, at least two value map dimensions are identified, wherein the value map dimensions correspond to respective groups of the sorted value creator parameters and the identifying is performed by the controller module.

In a step 6, the controller module assigns respective coordinates in a space defined by the value map dimensions to each of the business models. In a step 7, a data storage module of the computer stores the coordinates of all the business models to a computer-readable storage medium.

FIG 2 shows a block diagram for an exemplary implementation of a computer system or a computer program according to the improved concept.

The computer system CS or the computer program CP is represented schematically by a central block CS/CP. To the left side of the central block CS/CP, inputs to the computer program or CP or computer system CS are shown. The inputs comprise a representation of a plurality of business models BM and optionally comprise a set of respective quality rules QR.

On the right side of the block CS/CP, possible outputs of the computer program CP or computer system CS are shown. The outputs comprise a set of coordinates CO of the imported business models BM, which could be stored on a computer-readable storage medium. Optionally, the outputs comprise an evaluation EV of a business portfolio comprising at least some of the business models BM.

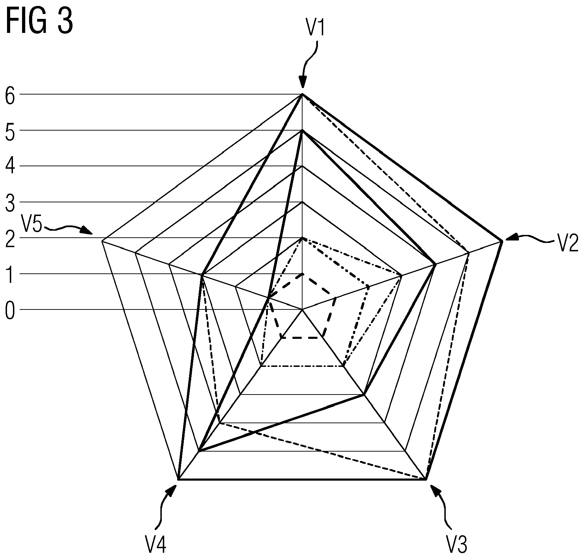

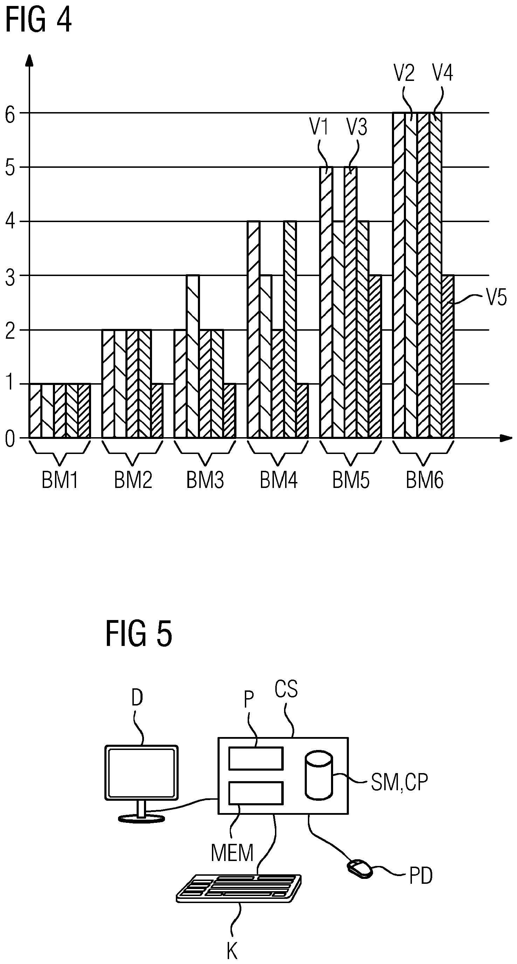

In FIG 3 and FIG 4, a plurality of business models BM1, BM2, BM3, BM4, BM5, BM6 are shown together with associated value driver or value creator parameters V1, V2, V3, V4, V5.

FIG 3 shows a spider chart, where each of five corners of the spider chart corresponds to a respective value creator parameter V1-V5. Each data line in the spider charts corresponds to a respective business model B1-B6.

FIG 4 shows a grouped bar diagram, wherein for each of the business models BM1-BM6, a group of respective bars corresponding to the value creator parameters V1-V5 is shown.

For example, but in no way restricting, the value creator parameters V1-V5 may comprise a user-role-count parameter V1, an integration-in-process parameter V2, a service-provider parameter V3, a direct-revenue parameter V4, or an indirect-revenue parameter V5.

FIG 5 shows a block diagram of an exemplary implementation of a computer system CS according to the improved concept.

The computer system CS comprises a processor P and a computer-readable storage medium SM. The computer-readable storage medium SM stores the computer program CP. The computer-readable storage medium SM may for example be or comprise a hard drive or a flash drive or any other read-write storage medium.

Optionally, the computer system CS comprises a dynamic memory MEM, in particular a random access memory MEM.

The processor P is configured to read the instructions stored in the computer program CP from the storage medium SM and execute the instructions. As a consequence, the processor P and/or other components of the computer system CS are caused to carry out a method according to the improved concept.

Optionally, the computer system CS may comprise an input device, for example a keyboard K or a pointing device PD. Furthermore, the computer system CS may optionally comprise a human machine interface, for example a display D.

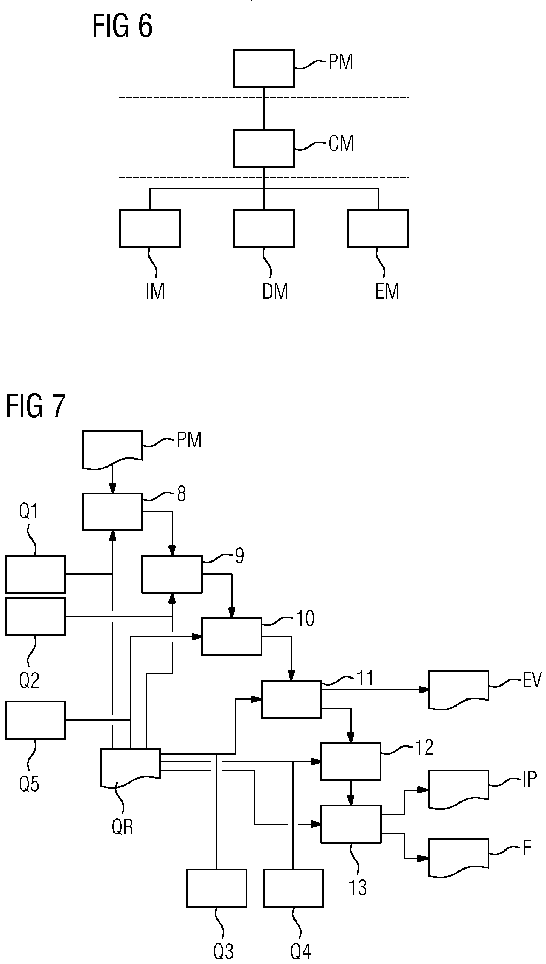

FIG 6 shows an exemplary implementation of a computer program according to the improved concept.

The computer program comprises several software modules depicted as blocks in FIG 6. In particular, the computer program comprises an import module IM for importing the representation of the business models.

Furthermore, the computer program comprises a controller module CM for identifying the set of value creator parameters, determining the respective value creation volumes, sorting the set of value creator parameters accordingly and identifying the at least two value map dimensions, as well assigning respective coordinates to the business models. The controller module CM is for example responsible for enabling and guiding the respective steps of a method according to the improved concept.

The computer program further comprises a data storage module DM for storing the coordinates of all of the business models to the computer-readable storage medium. The data storage module DM is for example and in particular configured to store persistent data in a transaction secured supporting separate workflows and a respective versioned outcome.

Optionally, the computer program may comprise an export module EM that is, for example, configured to export data and data structures out of the computer program.

Optionally, the computer program may comprise a presentation module PM, which may for example be configured to create different views of data and may be configured to collect user input.

In the shown example, the computer program is for example implemented as a three-tier system for distributed collaborative workflows.

The controller module CM may for example optionally comprise a rule checker submodule, as shown in FIG 7.

The rule checker submodule is for example configured to apply the quality rules QR to a current state of a value driver map that may for example be generated by the controller module as a result of the evaluation of the business models. The rule checker submodule may for example determine whether any of the quality rules QR is not satisfied and consequently, improvement may necessary.

The example of the rule checker submodule of FIG 7 comprises for example a measuring module 8, an evaluation module 9, a factoring module 10, an aggregation module 11, an improvement derivation module 12, and a sorting module 13. Inputs to the rule checker submodule are for example the value driver map VM and the quality rules QR.

The quality rules QR may for example comprise one or more measurements Q1, rules Q2, qualities Q3, principles Q4, and factors Q5.

The measuring module 8 may for example obtain the measurements Q1, process them and provide an output to the evaluation module 9 based on a processing result. The evaluation module 9 may obtain the rules Q2 and process it together with the output from the measuring module 8 and provide an output of the processing to the factoring module 10. The factoring module 10 may for example obtain the factors Q5 and process them together with the output from the evaluation module 9 to provide of the processing to the aggregation module 11.

The aggregation module 11 may obtain the qualities Q3 and process them together with the output from the factoring module 10 to provide and output of the processing to the improvement derivation module 12 and provide an evaluation EV of the value driver map VM. The improvement derivation module 12 may obtain the principles Q4 and process them together with the output of the aggregation module 11 to provide an output of the processing to the sorting module 13. The sorting module 13 may, based thereupon, produce and output improvement proposals IP or other findings F.

According to the improved concept, a system to realize business agility with speed and scale necessary for the digital service age is provided. As products dissolve into value streams, value creation is to be the focus for business models. The described system supports this by guiding definition and evaluation of business models by means of value drivers or creators. As many of these value creators are common to many business models in a specific domain, synergistic business value is in focus and the rightsizing of the targeted domain is supported.

Therein, in particular scaling a speed and agility in general is enabled by guidance and reuse from system knowledge base, parallel work on business models and the value creation space, automated quality control and generation of high quality input digital service realization based on cost and value engineering.

A starting point for some implementations is a common situation, where a lot of business models for a specific domain are waiting for digitalization. A common core should be known to head towards a minimal viable product (MVP) that gives a good and sustainable start into the domain.

According to some implementations to the improved concept, the business models may for example be ordered for evaluation, minimalization, white space detection, road mapping, input of one for task analysis heading towards an MVP, input of a selected set for domain analysis to come up with a service portfolio, development monitoring, operations monitoring and/or business intelligence.

Some implementations provide a way to sort the business models with respect to value creation in an incremental process and check during implementations and operation whether they are on track or need to be modified for gaining benefits.

According to implementations of the improved concept, the business models are mapped, in particular digital services implementing the business models are mapped, to value creator parameters and the value creator parameters are sorted qualitatively by value creation volume (for example versus cost). In case there are groups of independent value creators, they are added (after sorting) as a new dimension creating a value creator space. Some of the dimensions may seem obligatory for domain to create a viable offering, others may be optional.

The resulting space may be denoted a value driver or value creator map and can be used to find small business models to start by going close to the origin of the obligatory dimensions. Other uses may for example include defining an improvement direction. Another use is to define a value space for a set of business models, hence a business model portfolio, that serves as an input for realization of the selected services or products to start with cost and value engineering.

According to implementations of the improved concept, a set of business models for a domain serves as an input. They may be separated into categories and ordered to create a value driver. To this end, it may for example be started with stakeholders and respective stakeholder problems. Then it may for example be defined what is a respective value of solving the stakeholder problems. Revenue models for creating monitory values may then be used. Scaling effects may be exploited and a need for automation may be defined.

The business models may be evaluated based on the current set of value creator parameters. To this end, the business models may be made more precise with respect to a value creator parameter or split. White spaces may for example be identified and added. Value creator parameters may be added and ordered, split or merged.

The respective steps may for example be repeated and aligned with the orders defined by the value creator parameters.

A result may for example be compared to the input enhanced set of business models of a domain with a set of value creator parameters and the evaluation of the value drivers for each business model in scope.

To create a basic set of business models and value creator parameter information, it may be helpful to classify the business models to business types, determine standard revenue models per business type, determine stakeholders, typical value creators in a domain, determine evaluation information about cost and revenue of the standard value creator or determining constraints of a value creation for example legal market access and so forth.

In the present context, a business model may for example be an idea or a set of rules how to solve a problem and how to turn it into benefit.

A value may for example be what a customer gets, for example a product or a service of high quality in a respective period of time at a respective price.

Value creators or value creator parameters or value drivers may for example be anything that can be added to a product or service that will increase its value to consumers or customers. The value creators differentiate a product or service from those of the competitors and makes them more appealing to customers. A significant benefit of a value creator is providing a competitive advantage to a business, giving that business an upper hand in its industry. Value drivers can come in many forms, such as superior brand awareness or revolutionary technologies.

Stakeholders or success critical stakeholders may for example be or include persons directly involved with a success of the business model.

Quality rules are for example a criteria that a value driver map needs to adhere. The quality rules may for example refer to the completeness of the definition, its integrity and the relation to business rules or business models of the respective company. These criteria can be operationalized for example as rules or metrics.

A value driver or value creator map is for example a space created by business models and quantified value creators thus forming a portfolio.

According to the improved concept, a quick and incremental evaluation of business models is possible. There is a focus on value creation especially in the interplay of different ideas. This may serve as a basis for synergistic realization monitoring. Also, a basis for automated measurements in realization and operation of value creation may be formed.

The computer program according to a three-tier system for example, may allow for parallel work sessions of a distributed team. Import and export modules may prevent tool lock in and enable data transfer thus keeping the system small.

Quality criteria and rules and automated checks may be used to ensure definition of the value driver map to fit into cost and value-based engineering. Lengthy expert-based preview processes can be avoided and rework in engineering may be prevented. According to the improved concept, business agility may be achieved in a defined domain scope. This may include fast evaluation of business models or models, discovering new business models, sustainably realizing and operating business models as digital services. Furthermore, it may include focussing on value creation, especially synergistic values, from different business models, adjusting a domain scope.

## Claims

1. Computer-implemented method for evaluation of a plurality of software-based business models, the method comprising:
- for each of the business models (BM), importing a representation by an import module (IM), wherein the representation of a business model (BM) comprises a set of predefined business model parameters defining the business model (BM);
- identifying a set of value creator parameters by a controller module (CM) based on the business model parameters;
- for each value creator parameter, determining a respective value creation volume based on the business model parameters of all imported business models (BM) by the controller module (CM);
- sorting the set of value creator parameters according to their respective value creation volumes by the controller module (CM);
- identifying at least two value map dimensions corresponding to respective groups of the sorted value creator parameters by the controller module (CM);
- assigning respective coordinates (CO) in a space defined by the value map dimensions to each of the business models (BM) by the controller module; and
- storing the coordinates (CO) of all of the business models (BM) to a computer-readable storage medium (SM) by a data storage module (DM).

2. Computer-implemented method according to claim 1, wherein, after sorting the set of value creator parameters,
- at least one of the value creator parameters of the set of value creator parameters is split by the controller module (CM); and/or
- at least two of the value creator parameters of the set of value creator parameters are merged by the controller module (CM);
- the set of value creator parameters is updated by the controller module (CM) according to a result of the splitting and/or merging; and
- the updated set of value creator parameters is sorted according to their respective value creation volumes by the controller module (CM).

3. Computer-implemented method according to claim 2, wherein the identifying of at least two value map dimensions is performed corresponding to respective groups of the updated and sorted value creator parameters by the controller module (CM) .

4. Computer-implemented method according to one of claims 1 to 3, further comprising
- for each of the business models (BM), importing a respective set of quality rules (QR) by the import module (IM); and
- identifying the set of value creator parameters by the controller module (CM) based on the parameters of the imported business models (BM) in compliance with the respective set of quality rules (QR).

5. Computer-implemented method according to one of claims 1 to 4, further comprising
- generating a result of the evaluation by creating a value driver map (VM) depending on the coordinates of all of the business models (BM) by the controller module (CM); and
- storing the value driver map (VM) to the computer-readable storage medium (SM) by the data storage module (DM); and/or
- presenting the value driver map (VM) to a human-machine interface (D) by a presentation module (PM).

6. Computer program comprising instructions that, when executed by a computer system (CS), cause the computer system (CS) to carry out a method according to one of claims 1 to 5.

7. Computer program according to claim 6, comprising
- an import module (IM) for importing a representation for each of the business models (BM), wherein the representation of a business model (BM) comprises a set of predefined business model parameters defining the business model (BM);
- a controller module (CM) for:
- identifying a set of value creator parameters based on the parameters of the imported business models (BM);
- determining a respective value creation volume based on the business model parameters of all imported business models (BM) for each value creator parameter;
- sorting the set of value creator parameters according to their respective value creation volumes;
- identifying at least two value map dimensions corresponding to respective groups of the sorted value creator parameters; and
- assigning respective coordinates (CO) in a space defined by the value map dimensions to each of the business models (BM); and
- a data storage module (DM) for storing the coordinates (CO) of all of the business models (BM) to a computer-readable storage medium (SM).

8. Computer-readable storage medium, storing a computer program (CP) according to one of claim 6 or 7.

9. Computer system comprising
- a processor (P); and
- a computer-readable storage medium (SM) storing instructions that, when executed by the processor (P), cause the computer system (CS) to carry out a method according to one of claims 1 to 5.
